# EUROPEAN PATENT SPECIFICATION

(11) **EP 2 908 302 B1**
(45) Date of publication and mention of the grant of the patent: **13.11.2019**
(21) Application number: 15155009.2
(22) Date of filing: 13.02.2015
(51) Int. Cl.: G08C 17/02

(54) **OPERATION TERMINAL APPARATUS FOR MANUFACTURING APPARATUS, AND MANUFACTURING SYSTEM INCLUDING THE SAME**
BETRIEBSENDGERÄT FÜR HERSTELLUNGSVORRICHTUNG UND HERSTELLUNGSSYSTEM DAMIT
APPAREIL DE TERMINAL DE FONCTIONNEMENT POUR APPAREIL DE FABRICATION ET SYSTÈME DE FABRICATION COMPRENANT CELUI-CI

(30) Priority: 14.02.2014 JP 2014026089
(43) Date of publication of application: 19.08.2015
(73) Proprietor: Canon Kabushiki Kaisha, Tokyo 146-8501 (JP)
(72) Inventor: Takeda, Akihiro, Tokyo 146-8501 (JP)
(74) Representative: TBK

(56) References cited:
- WO-A1-2007/025879
- DE-A1-102006 046 791
- JP-A- 2008 242 755
- US-A1- 2008 077 255
- US-B2- 7 586 398

## Description

### BACKGROUND OF THE INVENTION

### Field of the Invention

The present invention relates to an operation terminal apparatus for a manufacturing apparatus, and a manufacturing system including these apparatuses.

### Description of the Related Art

Conventionally, in some cases, a manufacturing apparatus that performs processing and assembly of products is controlled through a terminal apparatus, and the manufacturing apparatus and the terminal apparatus are physically and electrically connected via a wire cable, such as a movable cable. Japanese Patent Application Laid-Open No. H11-102210 proposes a configuration where a numerical control apparatus for controlling a machine tool wirelessly communicates with a terminal apparatus for displaying the actuation state. The numerical control apparatus uses the terminal apparatus to monitor the actuation state of the numerical control apparatus and measured data from a remote place.

In some cases, through use of such a wireless communication technique, the terminal apparatus wirelessly communicates with the manufacturing apparatus to remotely operate the manufacturing apparatus. Through a display screen of the terminal apparatus, a manufacturing apparatus to be remotely operated is selected and then operated.

Unfortunately, according to the conventional art, through any operation terminal apparatus that can communicate with the manufacturing apparatus, the manufacturing apparatus can be operated. In such a state, for instance, if many manufacturing apparatuses of the same type are installed in a certain arrangement, an operator may erroneously select a manufacturing apparatus different from a manufacturing apparatus intended by the operator to operate and then actuate the apparatus.

The present invention has been made to solve the problem, and has an object to provide a manufacturing system and an operation terminal which allow the operator to securely operate the manufacturing apparatus intended by the operator to operate.

The WO 2007/025879 A1 discloses an arrangement for operating field devices by means of a separate portable operating unit, which communicates with a field device via a radio link. The field device carries a scannable identification and the operating unit has a reading unit for reading the identification and means for setting up the radio link to the field device according to the read identification.

The DE 10 2006 046791 A1 discloses a method which involves sending an identification signal of a medical diagnostic and/or therapy equipment, where the range of coverage of the identification signal is limited to an examination area. The identification signal is monitored by a portable control module. The known identification signal is compared with the identification signal of the medical diagnostic and/or therapy equipment stored in the control module. The operation of the equipment is blocked by the control module, if the known identification signal of the medical diagnostic and/or therapy equipment is not received.

The US 2008/077255 A1 discloses a method for enabling the operation of automatic components of a technical system via a mobile control and monitoring device.

The JP 2008 242755 A discloses radio communication of one operation device with a specific one of two or more numerical control devices by omitting an operation device for each numerical control device.

### SUMMARY OF THE INVENTION

The present invention provides a manufacturing system and an operation terminal apparatus as specified in the appended claims.

Further features of the present invention will become apparent from the following description of exemplary embodiments with reference to the attached drawings.

### BRIEF DESCRIPTION OF THE DRAWINGS

FIG. 1 is a diagram illustrating a schematic configuration of a manufacturing system according to a first embodiment of the present invention.
FIG. 2 is a block diagram of the manufacturing apparatus and a terminal apparatus in FIG. 1.
FIG. 3A is a schematic diagram of an operation unit of the terminal apparatus.
FIG. 3B is a schematic diagram of an operation unit of the terminal apparatus.
FIG. 4 is a flowchart illustrating an operation right acquisition process according to the first embodiment.
FIG. 5 is a diagram illustrating a schematic configuration of a manufacturing system according to an **unclaimed** example.
FIG. 6 is a block diagram of a manufacturing apparatus and a terminal apparatus illustrated in FIG. 5.
FIG. 7 is a flowchart illustrating an operation right acquisition process according to the **unclaimed** example.
FIG. 8 is a diagram illustrating a schematic configuration of a manufacturing system according to a second embodiment of the present invention.
FIG. 9 is a sequence diagram illustrating an operation right acquisition process according to the **second** embodiment.

### DESCRIPTION OF THE EMBODIMENTS

Embodiments of the present invention are hereinafter described with reference to the drawings. Note that dimensions, materials, shapes, and relative positions of configuration elements which are described in the following embodiments may be configured in any manner, and may vary according to the structure and various conditions of an apparatus to which the present invention is applied. Unless otherwise indicated, the scope of the present invention is not limited to modes specifically described in the following embodiments, which are taught below. In the diagrams described below, the same signs may be assigned to elements having the same function, and repetitive description of the elements may be omitted.

### [First Embodiment]

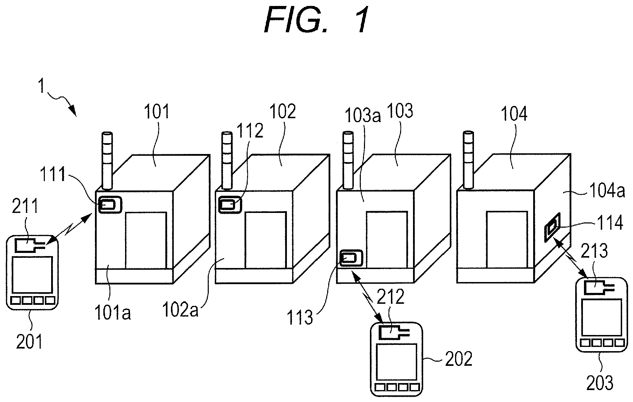

FIG. 1 is a schematic configuration diagram of a manufacturing system 1 according to a first embodiment of the present invention. As illustrated in FIG. 1, the manufacturing system 1 includes a plurality of manufacturing apparatuses 101 to 104, and a plurality of operation terminal apparatuses 201 to 203.

The manufacturing apparatuses 101 to 104 are general (or special) facilities for manufacturing tangible objects, such as products and components. An operator uses the operation terminal apparatuses 201 to 203 to operate the manufacturing apparatuses 101 to 104. The manufacturing apparatuses 101 to 104 are not limited but installed in a certain arrangement. The numbers of manufacturing apparatuses and operation terminal apparatuses are not limited thereto. The manufacturing apparatuses 101 to 104 may be facilities for producing intangible or shapeless objects, such as electricity, gas and water.

ID tags 111 to 114, which are ID holders, are attached to external walls 101a to 104a of the respective manufacturing apparatuses 101 to 104. Positions where the ID tags 111 to 114 are attached are not limited to those on the external walls 101a to 104a. Alternatively, the positions may be in the respective manufacturing apparatuses 101 to 104 only if wireless communication between the operation terminal apparatuses 201 to 203 and ID tags 111 to 114 are not interfered with.

The ID tags 111 to 114 are devices that can wirelessly communicate with the operation terminal apparatuses 201 to 203, and are contactless IC tags through use of an RFID (Radio Frequency IDentification) technique, such as Felica (registered trademark). More specifically, ID tag readers 211 to 213 provided for the operation terminal apparatuses 201 to 203 are caused to generate magnetic fields (with a radius ranging from several to thirty centimeters). When the ID tags 111 to 114 attached to the respective manufacturing apparatuses 101 to 104 enter the magnetic fields, coils in the ID tags receives the magnetism to generate current. Through use of the electricity, IC chips embedded in the ID tags 111 to 114 are activated, communicate with the ID tag readers 211 to 213 and exchange data.

The ID tags 111 to 114 store pieces of identification information (ID information) unique to the corresponding manufacturing apparatuses 101 to 104, respectively. For instance, the ID tag 111 attached to the manufacturing apparatus 101 stores the ID information on the manufacturing apparatus 101. The ID tag 113 attached to the manufacturing apparatus 103 stores the ID information on the manufacturing apparatus 103. The ID tags 111 to 114 thus have the different pieces of ID information. The manufacturing apparatuses 101 to 104 are identified based on the ID information. It is assumed that the ID tags 111 to 114 according to the present invention are passive IC tags that do not include a power source, and supplied with radio waves as an energy source from the operation terminal apparatuses 201 to 203. Alternatively, the IC tags may be active IC tags that internally include batteries.

The operation terminal apparatuses 201 to 203 can wirelessly communicate with the manufacturing apparatuses 101 to 104 and the ID tags 111 to 114, and include the respective ID tag readers 211 to 213, which serve as ID readers. The ID tag readers 211 to 213 can wirelessly communicate with the ID tags 111 to 114 at a short distance. The readers supply electricity to the ID tags 111 to 114 by transmitting radio waves, and receive the pieces of ID information on the corresponding manufacturing apparatuses 101 to 104 from the respective ID tags 111 to 114. Here, a "short distance" is within a range of the magnetic fields (with a diameter of about several to thirty centimeters) generated by the ID tag readers 211 to 213 provided in the operation terminal apparatuses 201 to 203. The distance may be appropriately adjusted in consideration of the dimensions and operation situations of the manufacturing apparatuses. For instance, the distance is adjusted such that when the operator tries to read the ID tag 111 of the manufacturing apparatus 101 using the operation terminal apparatus 201, the ID tag 112 of the adjacent manufacturing apparatus 102 is not erroneously read.

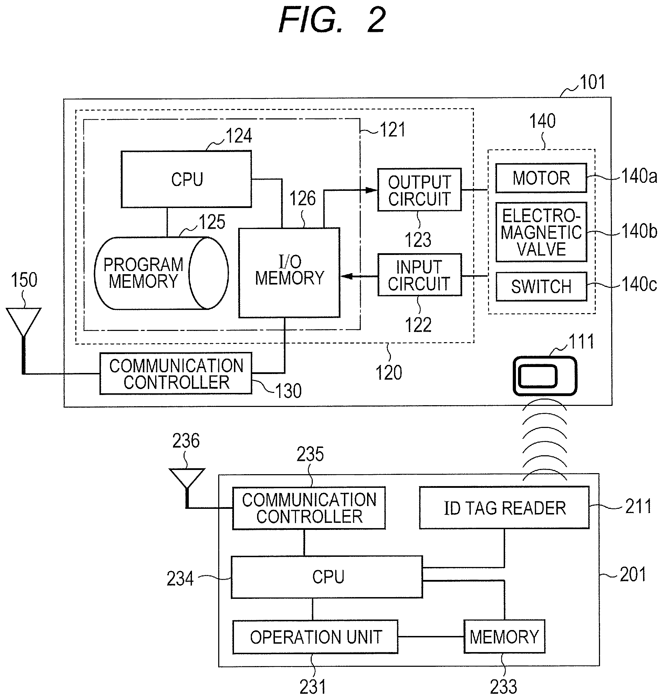

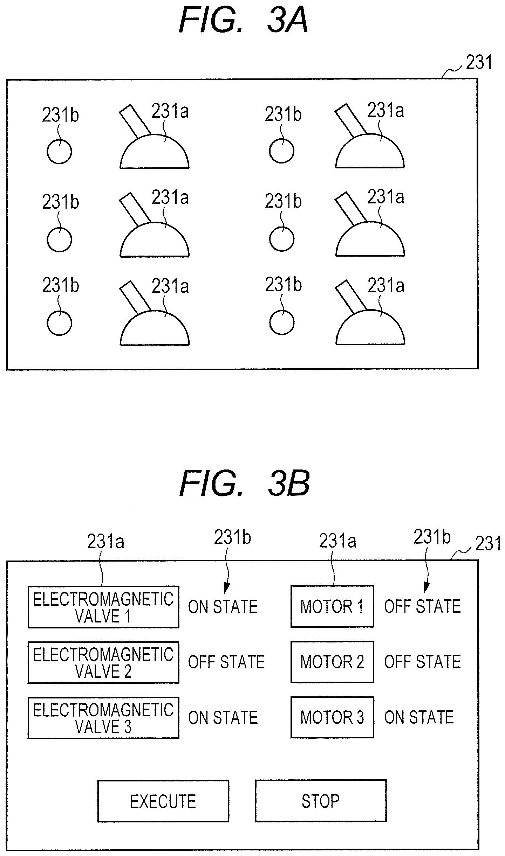

FIG. 2 is a block diagrams of the manufacturing apparatus and the operation terminal apparatus illustrated in FIG. 1, and FIGS. 3A and 3B are schematic diagrams of operation units of the terminal apparatuses. In FIGS. 2, 3A and 3B, the manufacturing apparatus 101 and the operation terminal apparatus 201 are used as examples for description. Since the other manufacturing apparatuses 102 to 104 and operation terminal apparatuses 202 and 203 have similar configurations, the description thereof is omitted.

The manufacturing apparatus 101 includes an ID tag 111, a programmable controller 120, a communication controller 130, an actuator unit 140 and an antenna 150.

The programmable controller 120 includes a control unit 121, an input circuit 122 and an output circuit 123. The control unit 121 includes a central processing unit (CPU) 124, which is a microcomputer, a program memory 125 and an I/O memory 126.

The control unit 121 acquires via the input circuit 122 signals transmitted from input devices, such as various sensors installed in the manufacturing apparatus 101, and from various devices in the actuator unit 140, and then outputs signals via the output circuit 123. The control unit 121 causes the CPU 124 to execute various programs stored in the program memory 125 to thereby variously control the manufacturing apparatus 101. For instance, the CPU 124 controls the output circuit 123 according to preliminarily programmed conditions to thereby control various output devices, such as the actuator unit 140 and indicator lights, not illustrated.

The numbers of input circuits and output circuits included in the programmable controller 120 are not limited thereto. Alternatively, the elements may be provided so as to connect various devices in the actuator unit 140 to associated address numbers of the corresponding I/O memory 126 in one-to-one correspondence.

The actuator unit 140 includes various devices for actuating the manufacturing apparatus 101. The CPU 124 controls the various devices in the actuator unit 140 based on a prescribed program stored in the program memory 125. In this embodiment, the actuator unit 140 includes one or more actuators, which are a motor 140a, an electromagnetic valve 140b and a switch 140c. This example does not imply any limitation.

The various devices (the motor 140a, the electromagnetic valve 140b and the switch 140c in this embodiment) of the actuator unit 140 are respectively associated with prescribed address numbers of the I/O memory 126. The CPU 124 changes the value in each address number in the I/O memory 126 to thereby control, via the output circuit 123, the various devices (the motor 140a, the electromagnetic valve 140b and the switch 140c) in the actuator unit 140.

For instance, if the electromagnetic valve 140b is associated with the address number "00000" of the I/O memory 126, the CPU 124 sets the address number to a prescribed value (1 or 0) to thereby turn on or off the electromagnetic valve 140b via the output circuit 123. The CPU 124 can rewrite the value in the address number "00000" associated with the electromagnetic valve 140b at every prescribed time interval according to a prescribed program to thereby repeatedly control turning on and off of the electromagnetic valve 140b. Such setting is made to many other electromagnetic valves, motors and indicator lights (not illustrated) and then an appropriate program is executed, thereby allowing complicated actuation of the manufacturing apparatus.

If the switch 140c is associated with the address number "00001" of the I/O memory 126, the prescribed value in the address number "00001" is set to "1" or "0" according to operation (on or off) of the switch 140c. At this time, the CPU 124 monitors the value in the address number "00001". When the value is set to "1" (or "0"), the address number "00000" is forcedly set to "1" to thereby enable the electromagnetic valve to be turned on (or off). Through such an operation of the switch 140c, the operator can control (turn on or off) the electromagnetic valve 140b. Thus, each one of the address numbers of the I/O memory 126 is associated with one of the motor 140a, the electromagnetic valve 140b, the switch 140c and the indicator light (not illustrated), and connection is established via the output circuit 123 and the input circuit 122.

The communication controller 130 creates data on values of the address numbers of the I/O memory 126 using a prescribed set, and transmits the data to the operation terminal apparatus 201 via the antenna 150. The communication controller 130 receives data representing the states of various devices of the actuator unit 140 and an operation instruction from a communication controller 235 of the operation terminal apparatus 201 via an antenna 236. The communication controller 130 rewrites the value in the corresponding address number of the I/O memory 126 according to the data received from the operation terminal apparatus 201. For instance, upon receipt of an operation instruction of turning on the electromagnetic valve 140b from the operation terminal apparatus 201, the communication controller 130 rewrites the value in the address number "00000" associated with the electromagnetic valve 140b to "1". The communication controller 130 can read or write data from and to the I/O memory 126 irrespective of timing of change of the value in each address number of the I/O memory 126. Note that WLAN adapters may be used as the antennas 150 and 236 to allow data to be wirelessly transmitted and received between the communication controllers 130 and 235 via an Internet Protocol.

The operation terminal apparatus 201 includes the ID tag reader 211, an operation unit 231, a memory 233, a CPU 234 serving as a control unit, and the communication controller 235.

The ID tag reader 211 is a device that serves as an RFID reader for supplying power to the ID tag attached to the manufacturing apparatus and reading information from the ID tag. When the ID tag reader 211 approaches the ID tag 111, the ID tag reader 211 reads the ID information stored in the ID tag 111. The ID tag reader 211 may be, for instance, any of Felica (registered trademark) card reader and NFC (Near Field Communication) tag reader. The ID information on the manufacturing apparatus 101 is read by the ID tag reader 211 from the ID tag 111, thereby allowing the operation terminal apparatus 201 to acquire an operation right for the manufacturing apparatus 101.

The operation unit 231 is an interface and controller for operating various devices (the motor 140a, and electromagnetic valve 140b) in the actuator unit 140 of the manufacturing apparatus 101. The operator can remotely actuate the various devices by operating the operation unit 231. For instance, as illustrated in FIG. 3A, the operation unit 231 includes a plurality of operation switches 231a corresponding to the respective various devices of the manufacturing apparatus 101. Indicators 231b for indicating the states of the corresponding various devices may be provided adjacent to the corresponding operation switches 231a. As illustrated in FIG. 3B, the operation unit 231 may be an image that is displayed on a display and provided for operating the manufacturing apparatus. In this case, the operator can remotely actuate the various devices by operating the operation objects 231a that are displayed on the display and correspond to actuation of the various devices of the manufacturing apparatus. Furthermore, the operator can know the states of the various devices through pieces of information 231b displayed on the display. The operation terminal apparatus may be configured to allow the operator to only perform an operation preliminarily associated with the ID information on each manufacturing apparatus. For instance, in the case of using the operation terminal apparatus 201, the operator may only be allowed to perform control of the electromagnetic valve for the manufacturing apparatus 101, while only being allowed to perform control of the motor for the manufacturing apparatus 102.

The memory 233 of the operation terminal apparatus 201 preliminarily stores an ID information list pertaining to the pieces of ID information on one or more manufacturing apparatuses controllable through the operation terminal apparatus 201. The memory 233 also preliminarily stores the relationships between the operation switches (objects) 231a of the operation unit 231 and the corresponding address numbers of the I/O memory of the manufacturing apparatus. Furthermore, the memory 233 stores various programs. The CPU 234 executes the various programs to thereby allow operations of the operation terminal apparatus 201.

The CPU 234 monitors the operation state of the operation unit 231, and transmits the operation state of the operation unit 231, via the communication controller 235, to the manufacturing apparatus whose operation right is acquired by the operation terminal apparatus 201. The CPU 234 changes the displayed state of the operation unit 231 (light up and out of the indicators 231b, and update of the pieces of state information 231b) based on data on the manufacturing apparatus 101 received via the communication controller 235.

The ID tag reader 211 reads the ID information on the manufacturing apparatus 101 from the ID tag 111. The operation terminal apparatus 201 can thus acquire the operation right for the manufacturing apparatus 101, and become allowed to operate the manufacturing apparatus 101.

The communication controller 235 transmits and receives data to and from the communication controller 130 of the manufacturing apparatus 101 via the antenna 236. For instance, it is assumed that the communication controller 235 of the operation terminal apparatus 201 transmits, to the manufacturing apparatus 101, information about on-off of the switch 231a pertaining to the electromagnetic valve 140b of the manufacturing apparatus 101. At this time, the communication controller 130 of the manufacturing apparatus 101 changes the value in the address number of the I/O memory 126 corresponding to the electromagnetic valve 140b to a prescribed value, and the electromagnetic valve 140b is subjected to on-off control via the output circuit 123.

In this embodiment, the operation terminal apparatus 201 acquires the operation right for the manufacturing apparatus 101 by reading the ID tag 111 of the desired manufacturing apparatus 101 through the ID tag reader 211. The operator thus acquires the operation right and becomes allowed to operate the manufacturing apparatus 101 using the operation terminal apparatus 201. Processes of acquiring and discarding the operation right for the manufacturing apparatus performed by the operation terminal apparatus are now described.

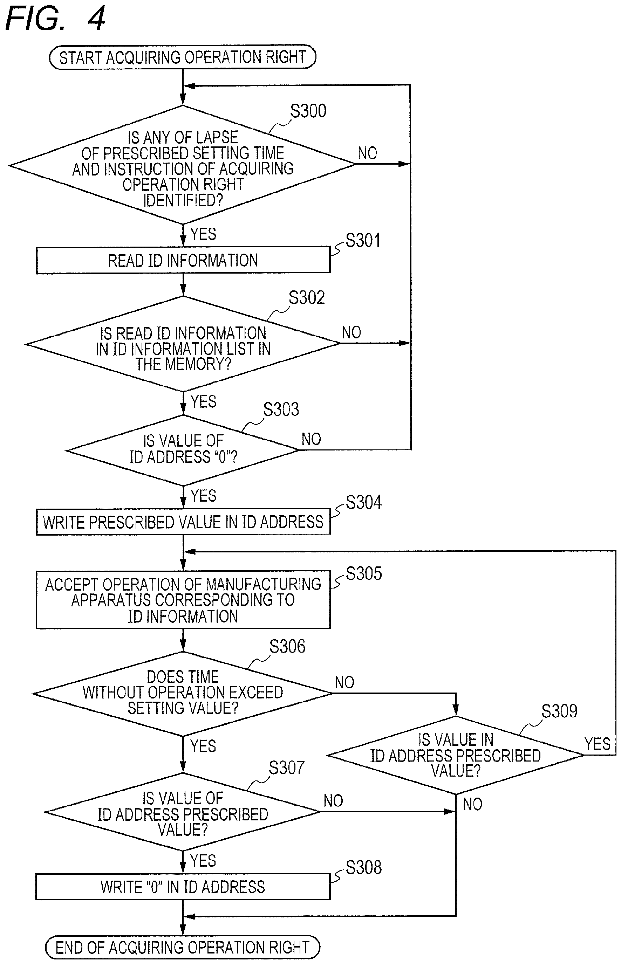

FIG. 4 is a flowchart of the processes of acquiring and discarding the operation right for the manufacturing apparatus performed by the operation terminal apparatus. Here, the processes are described which acquires and discards the operation right for the manufacturing apparatus 101 performed by the operation terminal apparatus 201 in the case where the operator intends to operate the manufacturing apparatus 101 using the operation terminal apparatus 201.

First, when the operator puts the operation terminal apparatus 201 near the ID tag 111 of the manufacturing apparatus 101, the CPU 234 of the operation terminal apparatus 201 determines whether any of a lapse of a prescribed setting time and an operation right acquisition instruction from the operator is identified or not (step S300). Here, the operation right acquisition instruction from the operator may be, for instance, a press of a button (not illustrated) for starting acquiring the operation right for the operation terminal apparatus 201.

If the setting time has not elapsed yet and no operation right acquisition instruction has been identified (No in step S300), the processing returns to the start of acquiring the operation right (step S300). If the setting time has elapsed or the operation right acquisition instruction has been identified (Yes in step S300), the CPU 234 issues the instruction to the ID tag reader 211, and the ID tag reader 211 reads the ID information on the manufacturing apparatus 101 from the ID tag 111 (step S301).

The CPU 234 verifies the ID information on the manufacturing apparatus 101 read by the ID tag reader 211 against the ID information list preliminarily stored in the memory 233, and determines whether the read ID information is in the ID information list or not (step S302). Here, presence of the ID information read by the ID tag reader 211 in the ID information list means that the operation terminal apparatus 201 can acquire the operation right for the manufacturing apparatus 101.

If the ID information read by the ID tag reader 211 is not in the ID information list (No in step S302), the operation terminal apparatus 201 does not have the right (operation right) for operating the manufacturing apparatus 101, and the processing returns to the start of acquiring the operation right (step S300). At this time, an indication of absence of the operation right may be displayed on a display unit (not illustrated) of the operation terminal apparatus 201.

If the ID information is in the ID information list (Yes in step S302), the communication controller 235 of the operation terminal apparatus 201 communicates with the communication controller 130 of the manufacturing apparatus 101, and receives information on the prescribed ID address number of the I/O memory 126. The information on the ID address number is a unique value that is other than "0" and different from values for the other operation terminals. For instance, the operation terminal apparatus 201 is provided with "201", and the operation terminal apparatus 202 is provided with "202". The CPU 234 of the operation terminal apparatus 201 determines whether the value on the ID address number of the I/O memory 126 in the manufacturing apparatus 101 is "0" or not (step S303). If the value of the ID address number is "0", the operation right for the manufacturing apparatus 101 has not been acquired yet. If the value of the ID address number is not "0", the operation right for the manufacturing apparatus 101 has already been acquired from any of the operation terminal apparatuses.

If the value of the ID address number is not "0" (No in step S303), another operation terminal apparatus has acquired the operation right for the manufacturing apparatus 101. Accordingly, the operation terminal apparatus 201 does not acquire the operation right for the manufacturing apparatus 101, and the processing returns to start of acquiring the operation right (step S300).

If the value of the ID address number is "0" (Yes in step S303), the CPU 234 transmits, to the manufacturing apparatus 101, an instruction for writing a prescribed value for identifying the operation terminal apparatus 201 in the ID address number. In response to the transmission, the communication controller 130 of the manufacturing apparatus 101 writes the prescribed value in the ID address number, thereby allowing the operation terminal apparatus 201 to acquire the operation right for the manufacturing apparatus 101 (step S304).

The CPU 234 of the operation terminal apparatus 201 reads, from the memory 233, the relationships between the various devices in the actuator unit 140 of the manufacturing apparatus 101 and the address numbers of the I/O memory 126 corresponding to the operation switches (or operation objects) 231a of the operation unit 231 in the operation terminal apparatus 201. The CPU 234 accepts an operation of the operation switch (object) 231a, and transmits the instruction for the accepted operation, via the communication controller 235, to the manufacturing apparatus 101 whose ID tag 111 has been read (step S305). Thus, the operation terminal apparatus 201 can remotely operate the manufacturing apparatus 101.

The CPU 234 of the operation terminal apparatus 201 compares a time with no operation input from the operator (time without operation) with a prescribed setting time (step S306). The setting time in this step may be the same as the setting time in step S300. If the time without operation exceeds the setting time (Yes in step S306), the CPU 234 of the operation terminal apparatus 201 receives information pertaining to the value in the ID address number from the communication controller 130 of the manufacturing apparatus 101. Based on the information, the CPU 234 determines whether or not the value on the ID address number of the I/O memory 126 matches with a prescribed value for identifying the operation terminal apparatus 201 (step S307).

If the value in the ID address number of the I/O memory 126 matches with the prescribed value for identifying the operation terminal apparatus 201 (Yes in step S307), the operation terminal apparatus 201 still holds the operation right for the manufacturing apparatus 101. Accordingly, the CPU 234 of the operation terminal 201 transmits, to the manufacturing apparatus 101, an instruction of writing the value "0" representing that the operation right for the manufacturing apparatus 101 has not been acquired in the ID address number of the I/O memory 126, and discards the operation right for the manufacturing apparatus 101 (step S308). If the value in the ID address number does not match with the prescribed value for identifying the operation terminal apparatus 201 (No in step S307), the operation right for the manufacturing apparatus 101 has already been acquired by another operation terminal apparatus. Accordingly, also in this case, the CPU 234 of the operation terminal apparatus 201 discards the operation right for the manufacturing apparatus 101.

If time without operation does not exceed the setting time in step S306, the CPU 234 determines whether the value in the ID address number of the I/O memory 126 of the manufacturing apparatus 101 matches with the value for identifying the operation terminal apparatus 201 or not (step S309). If the value in the ID address number does not match with the value for identifying the operation terminal apparatus 201 (No in step S309), another operation terminal apparatus has already acquired the operation right for the manufacturing apparatus 101. Accordingly, the CPU 234 of the operation terminal apparatus 201 discards the operation right for the operation terminal apparatus 201. If the value in the ID address number matches with the value for identifying the operation terminal apparatus 201 (Yes in step S309), the operation terminal apparatus 201 still holds the operation right for the manufacturing apparatus 101, and accepts an operation from the operator (step S305). The operation terminal apparatus 201 accepts an operation input from the operator, and transmits the instruction of the accepted operation to the manufacturing apparatus 101 whose operation right has been acquired, via the communication controller 235.

As described above, in this embodiment, the operation terminal apparatus 201 reads the ID information from the ID tag 111 of the manufacturing apparatus 101. If the ID information is in the ID information list and the value in the ID address is "0", the operation terminal apparatus 201 acquires the operation right for the manufacturing apparatus 101. Note that step S303 may be omitted and the operation right may be overridden.

The operator is thus required to personally go to read the ID information on the manufacturing apparatus to acquire the operation right for the manufacturing apparatus intended to operate. The manufacturing apparatus intended by the operator to operate can therefore be securely operated.

### [Unclaimed Example]

Next, a manufacturing system according to **an unclaimed example** is described. In this **unclaimed example,** an image ID is used as an ID holder instead of the ID tag, and the manufacturing apparatus and the operation terminal apparatus are connected to each other by a movable cable. These points are different from those in the first embodiment. However, the other configuration is common. Accordingly, the same signs are assigned to the common points. The description thereof is omitted.

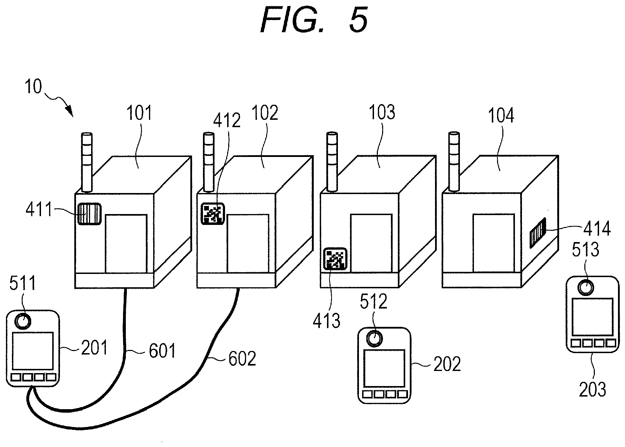

FIG. 5 is a schematic configuration diagram of the manufacturing system 10 according to the **unclaimed example.** Manufacturing apparatuses 101 to 104 of the manufacturing system 10 are installed in a certain arrangement. Image IDs 411 to 414 are pasted on the respective apparatuses. The image IDs 411 to 414 are images including pieces of ID information on the respective manufacturing apparatuses 101 to 104, and are, for instance, any of bar codes, QR codes (registered trademark), Gray codes, or prescribed image patterns.

The operation terminal apparatuses 201 to 203 include respective image readers (ID readers) 511 to 513 for reading the image IDs 411 to 414 attached to the manufacturing apparatuses 101 to 104. The image readers 511 to 513 may be, for instance, any of digital cameras and bar code readers. The manufacturing apparatuses 101 to 104 and the operation terminal apparatuses 201 to 203 are connected to each other via movable cables. For simplicity, FIG. 5 illustrates a mode where the operation terminal apparatus 201 is connected to the manufacturing apparatuses 101 and 102 by movable cables 601 and 602. Alternatively, the operation terminal apparatus 201 may be connected to the manufacturing apparatuses 101 and 102 by the movable cables 601 and 602, and the other operation terminal apparatuses 202 and 203 may wirelessly communicate with the manufacturing apparatuses 103 and 104.

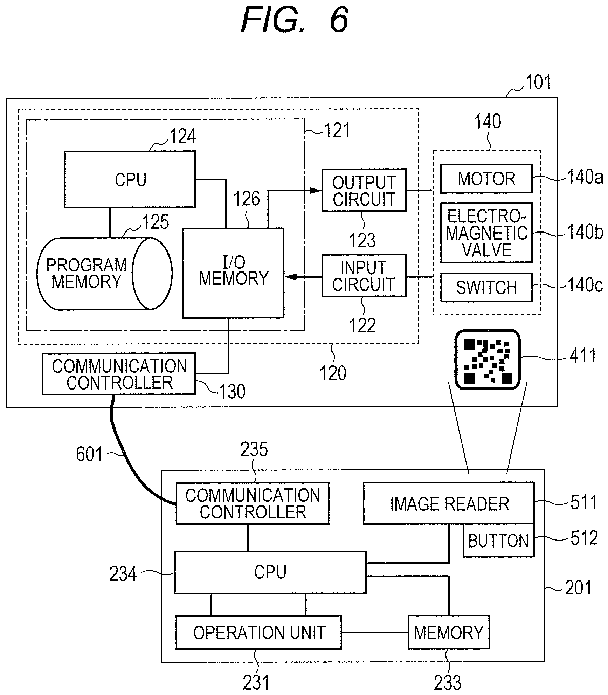

FIG. 6 is a block diagram of the manufacturing apparatus 101 and the operation terminal apparatus 201. The operation terminal apparatus 201 includes an image reader 511. When a button 512 is pressed by an operator, the image reader 511 reads the image ID 411. The communication controller 130 of the manufacturing apparatus 101 and the communication controller 235 of the operation terminal apparatus 201 are connected to each other in a manner capable of communication through the movable cable 601.

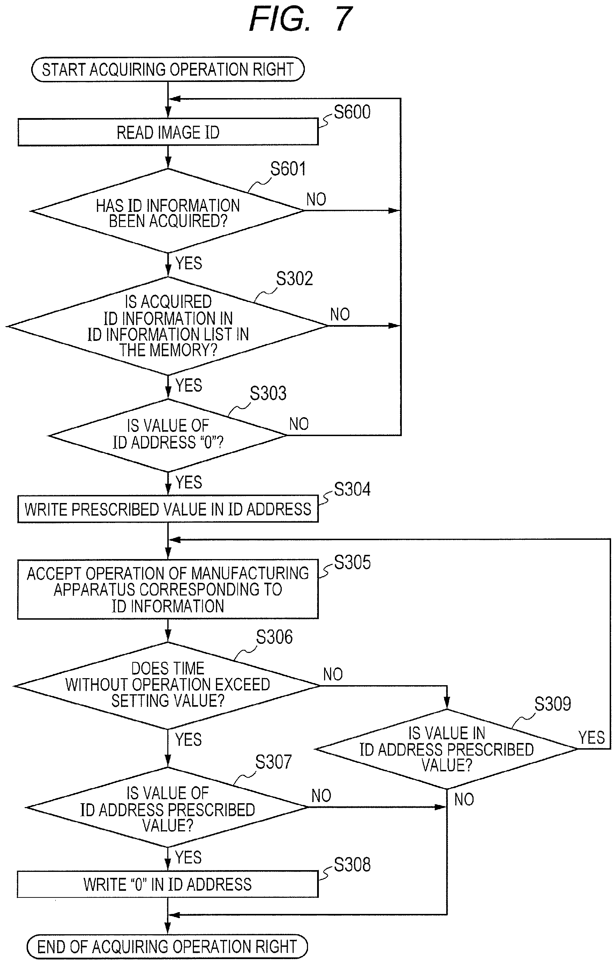

FIG. 7 is a flowchart of an operation right acquisition process according to **the unclaimed example.** Steps S302 to S309 are analogous to those in the first embodiment (FIG. 4). Accordingly, the description thereof is omitted.

The operator aims the image reader 511 of the operation terminal apparatus 201 at the image ID 411 on the manufacturing apparatus 101 intended to operate, and operates the button 512 to cause the image reader 511 to read the image ID 411 (step S600). The CPU 234 of the operation terminal apparatus 201 then determines whether the ID information on the manufacturing apparatus 101 has been acquired from the image ID 411 or not (step S601). If the ID information has not been acquired (No in step S601), the processing returns to the start of acquiring the operation right (step S600). If the ID information has been acquired (Yes in step S601), the processing proceeds to steps S302 to S309. The description thereof is omitted.

As described above, the operator is required to personally go to read the ID information on the manufacturing apparatus to acquire the operation right for the manufacturing apparatus intended to operate. Accordingly, the manufacturing apparatus intended by the operator to operate can be securely operated.

### [Second Embodiment]

Next, a manufacturing system according to a second embodiment of the present invention is described. In this embodiment, a manufacturing apparatus and an operation terminal apparatus communicate with each other via a wireless machine. This point is different from that in the first embodiment. The other configuration is common. Accordingly, the same signs are assigned to the common points. The description thereof is omitted.

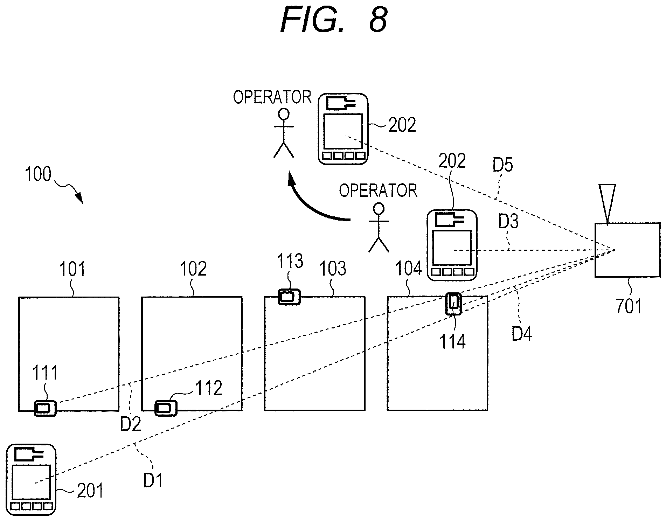

FIG. 8 is a schematic configuration diagram of the manufacturing system 100 according to this embodiment viewed from the above. The manufacturing system 100 includes a plurality of manufacturing apparatuses 101 to 104, a plurality of operation terminal apparatuses 201 and 202, and a wireless machine 701, which is a communication device.

ID tags 111 to 114 are attached to the manufacturing apparatuses 101 to 104, respectively. The ID tags 111 to 114 are attached to the manufacturing apparatuses 101 to 104 at substantially identical heights. The wireless machine 701 is installed at a position capable of communicating with the manufacturing apparatuses 101 to 104 and the operation terminal apparatuses 201 and 202. The wireless machine 701 is disposed at a position where the distances between the wireless machine 701 and the ID tags 111 to 114 of the manufacturing apparatuses 101 to 104 are different from each other. For instance, the wireless machine 701 is fixedly disposed on a side of the manufacturing apparatus 104, which is at an end of the manufacturing apparatuses 101 to 104 disposed at a certain arrangement. In FIG. 8, the distance D2 between the ID tag 111 and the wireless machine 701 is the longest. The distance D4 between the ID tag 114 and the wireless machine 701 is the shortest. The operation terminal apparatuses 201 to 203 relay communication at the wireless machine 701 to communicate with the manufacturing apparatuses 101 to 104.

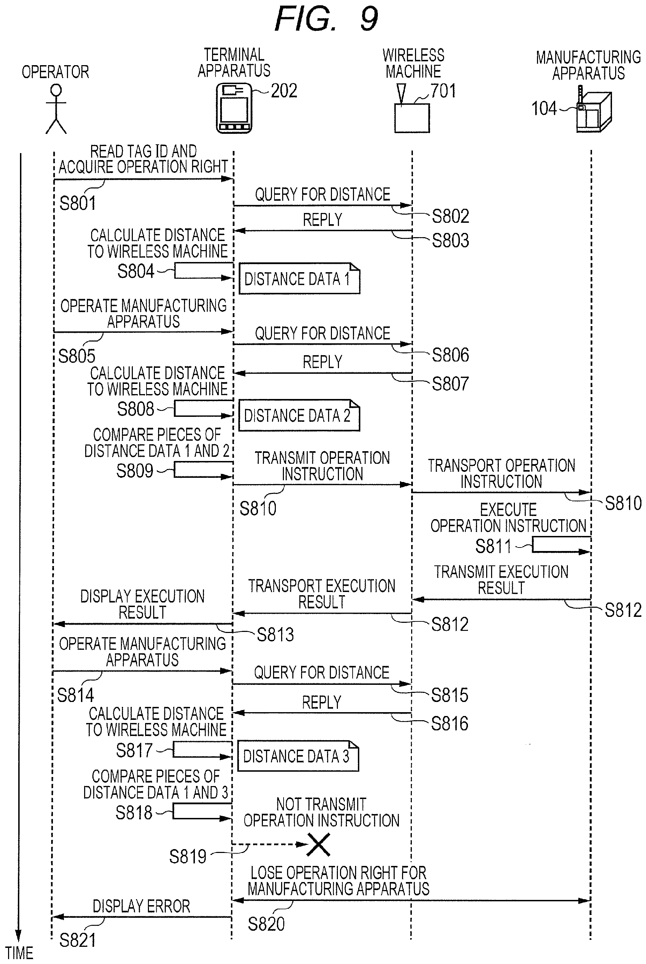

FIG. 9 is a sequence diagram illustrating a process of acquiring the operation right for the manufacturing apparatus according to this embodiment. Description is hereinafter made based on FIG. 9. In the following description, the case is illustrated where an operator uses the operation terminal apparatus 202 to acquire the operation right for the manufacturing apparatus 104 intended to operate.

The operator approaches the manufacturing apparatus 104 intended to operate, and causes the ID tag reader 212 of the operation terminal apparatus 202 to read the ID tag 114 of the manufacturing apparatus 104. At this time, the operation terminal apparatus 202 communicates with the manufacturing apparatus 104 via the wireless machine 701, and executes the foregoing steps S302 to S304. As a result, information for identifying the operation terminal apparatus is written in the ID address number of the I/O memory 126 in the manufacturing apparatus 104. The operation terminal apparatus 202 acquires the operation right for the manufacturing apparatus 104 (step S801).

For checking the distance between the operation terminal apparatus 202 and the wireless machine 701 at a time of reading the ID tag 114, the operation terminal apparatus 202 transmits a signal to the wireless machine 701 (time t1), and queries the wireless machine for the distance between the operation terminal apparatus 202 and the wireless machine 701 (step S802). The operation terminal apparatus 202 stores the time t1 when the signal is transmitted to the wireless machine 701.

The wireless machine 701 receives the signal from the operation terminal apparatus 202 (time t2), and transmits a reply signal to the operation terminal apparatus 202 (time t3) (step S803). The reply signal includes information on the receipt time t2 and the transmission time t3 at the wireless machine 701. The operation terminal apparatus 202 receives the reply signal (time t4), and calculates distance data 1 between the operation terminal apparatus 202 and the wireless machine 701 based on the relationship between the propagation speed c of radio waves and the times t1 to t4 (step S804). Here, the distance data 1 is acquired by c × {(t4 - t1) - (t3 - t2)}/2, and is "D3" as illustrated in FIG. 8. The distance D4 between the ID tag 114 and the wireless machine 701 is known and has a constant value.

The operator operates the operation terminal apparatus 202 to instruct actuation control of the intended manufacturing apparatus 104 (step S805). The operation terminal apparatus 202 transmits a signal to the wireless machine 701 (time t5) to query this machine for the distance between the operation terminal apparatus 202 and the wireless machine 701 (step S806). The operation terminal apparatus 202 stores the time t5 when the signal is transmitted to the wireless machine 701.

The wireless machine 701 receives the signal from the operation terminal apparatus 202 (time t6), and transmits a replay signal to the operation terminal apparatus 202 (time t7) (step S807). The reply signal includes information on the receipt time t6 and the transmission time t7 at the wireless machine 701. The operation terminal apparatus 202 receives the reply signal (time t8), and calculates distance data 2 between the operation terminal apparatus 202 and the wireless machine 701 based on the relationship between the propagation speed c of radio waves and the times t5 to t8 (step S808) . At this time, the distance data 2 can be acquired by c × {(t8 - t5) - (t7 - t6)}/2, and is not changed and is defined as "D3".

The operation terminal apparatus 202 compares the distance data 1 acquired in step S804 with the distance data 2 acquired in step S808 (step S809) . In this step, the operation terminal apparatus 202 acquires the difference between the position where the ID tag 114 has been read and the position where the operator has input the operation for the manufacturing apparatus 104 through the operation terminal apparatus 202 according to the pieces of distance data 1 and 2. The difference between the distance between the operation terminal apparatus and the wireless machine and the distance between the ID tag of the manufacturing apparatus and the wireless machine may be used. If the difference is within an operable range (prescribed threshold), the operation of the manufacturing apparatus 104 is continued. As described later, if the difference is not within the operable range, the operation terminal apparatus 202 loses the operation right for the manufacturing apparatus 104. Here, the operable range encompasses the proximity of the manufacturing apparatus to which the read ID tag is attached, is configured according to the dimensions of the manufacturing apparatus, and is preliminarily stored in the operation terminal apparatus 202.

If the difference is within the operable range, the operation terminal apparatus 202 transmits an operation instruction to the wireless machine 701, and the wireless machine 701 transports the instruction to the manufacturing apparatus 104 (step S810). The manufacturing apparatus 104 executes the operation according to the operation instruction (step S811). The manufacturing apparatus 104 transmits the execution result of the operation to the operation terminal apparatus 202 via the wireless machine 701 (step S812), and the operation terminal apparatus 202 displays the execution result for the operator (step S813). Note that steps S812 and S813 may be omitted.

It is assumed that, subsequently, the operation terminal apparatus 202 still holds the operation right for the manufacturing apparatus 104, the operator moves to a position apart from the manufacturing apparatus 104 (out of the operable range), and tries to operate the manufacturing apparatus 104 at this position (see FIG. 8).

The operator operates the operation terminal apparatus 202, and instructs actuation control of the intended manufacturing apparatus 104 (step S814). The operation terminal apparatus 202 transmits a signal to the wireless machine 701 (time t9), and queries this machine for the distance between the operation terminal apparatus 202 and the wireless machine 701 (step S815). The operation terminal apparatus 202 stores the time t9 when the signal is transmitted to the wireless machine 701.

The wireless machine 701 receives the signal from the operation terminal apparatus 202 (time t10), and transmits a reply signal to the operation terminal apparatus 202 (time t11) (step S816). The reply signal includes information on the receipt time t10 and the transmission time t11 at the wireless machine 701. The operation terminal apparatus 202 receives the reply signal (time t12), and calculates the distance data 3 between the operation terminal apparatus 202 and the wireless machine 701 based on the relationship between the propagation speed c of the radio waves and the times t9 to t12 (step S817). Here, the distance data 3 can be acquired by c × {(t12 - t9) - (t11 - t10)}/2, and is defined as "D5" that is longer than D3.

The operation terminal apparatus 202 compares the distance data 1 (or the distance data 2 or the distance D4 between the ID tag 114 and the wireless machine 701) with the distance data 3 acquired in step S817 (step S818). If the difference between both data items (D5 - D3) is larger than a prescribed threshold (operable range), the operation terminal apparatus 202 does not transmit the operation instruction to the manufacturing apparatus 104 (step S819). For discarding the operation right for the manufacturing apparatus 104, the operation terminal apparatus 202 communicates with the manufacturing apparatus 104 via the wireless machine 701, and changes the value in the ID address number of the I/O memory 126 in the manufacturing apparatus 104 to "0" as in the foregoing case of step S308 (step S820). Thus, the operation terminal 202 loses the operation right for the manufacturing apparatus 104,
and the loss is displayed on a display (not illustrated), thereby notifying the operator (step S821).

As described above, in this embodiment, the operation terminal apparatus compares the distance from the wireless machine at the time when the ID tag is read (or the distance between the ID tag and the wireless machine) with the distance from the wireless machine at the time when the operation terminal apparatus receives the input pertaining to the operation of the manufacturing apparatus. If the difference between both the data items is within the operable range, i.e., in the case where the operator is within the operable range of the manufacturing apparatus, the operation terminal apparatus is allowed to operate the manufacturing apparatus. If the operator is not within the operable range, the operation terminal loses the operation right for the manufacturing apparatus. Accordingly, the operator can securely operate the manufacturing apparatus intended to operate.

The present invention is not limited to the foregoing embodiments. Alternatively, various modifications can be made in a range without departing from the scope of the present invention as defined in the appended claims. For instance, as described above, the time is used for measuring the distance. Alternatively, any method capable of acquiring the distance from the wireless machine can be adopted.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment (s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
The object is to provide a manufacturing system allowing operation of a manufacturing apparatus intended by an operator to operate. A manufacturing system includes a manufacturing apparatus, and an operation terminal apparatus capable of communicating with the manufacturing apparatus, wherein an ID tag including ID information on the manufacturing apparatus is attached to the manufacturing apparatus, and the operation terminal apparatus includes: an ID reader that generates current in the ID tag through a magnetic field and reads the ID information from the ID tag; and a control unit that allows the manufacturing apparatus to be operated only after reading the ID information.

## Claims

1. A manufacturing system (1) comprising a manufacturing apparatus (101-104), and an operation terminal apparatus (201-203) capable of communicating with the manufacturing apparatus,
wherein an ID tag including ID information on the manufacturing apparatus is attached to the manufacturing apparatus, and
the operation terminal apparatus comprises: an ID reader (211) configured for reading the ID information from the ID tag; and control means (234) configured to allow the manufacturing apparatus to be operated only after reading the ID information from the ID tag by the ID reader,
**characterized in that**,
when the ID information is a predetermined value, the operation terminal apparatus is configured to receive an ID address number from the manufacturing apparatus, and when the received ID address number is a value representing that an operation right for the manufacturing apparatus has not been acquired, the operation terminal apparatus is configured to transmit a value for identifying the operation terminal apparatus to the manufacturing apparatus,
the manufacturing apparatus is configured to write, as the ID address number, instead of the value that the operation right for the manufacturing apparatus has not been acquired, the value for identifying the operation terminal apparatus received from the operation terminal apparatus, and
the manufacturing apparatus that has written the value for identifying the operation terminal apparatus is operable by the operation terminal apparatus of which the value for identifying the operation terminal apparatus has been written by the manufacturing apparatus.

2. The manufacturing system according to claim 1, wherein the operation terminal apparatus is configured to allow an operation preliminarily associated with the ID information.

3. The manufacturing system according to claim 1 or 2, wherein the operation terminal apparatus is configured to operate the manufacturing apparatus through a wireless machine (701).

4. The manufacturing system according to claim 3, wherein the control means is configured to not transmit an operation instruction if a difference between a first distance and a second distance is longer than a prescribed threshold, the first distance being between the operation terminal apparatus reading the ID information and the wireless machine, and the second distance being between the operation terminal apparatus and the wireless machine at a time of trying to transmit the operation instruction for actuating the manufacturing apparatus.

5. The manufacturing system according to claim 1, wherein
the ID reader is configured to generate current in the ID tag through a magnetic field.

6. An operation terminal apparatus (201-203) capable of communicating with a manufacturing apparatus (101-104), comprising:
an ID reader (211) configured for generating current in an ID tag attached to the manufacturing apparatus through a magnetic field and reading ID information on the manufacturing apparatus from the ID tag; and
control means (234) configured to allow the manufacturing apparatus to be operated only after reading the ID information from the ID tag by the ID reader,
**characterized in that**,
when the ID information read by the ID reader is a predetermined value, the control means is configured to receive an ID address number from the manufacturing apparatus, and when the received ID address number is the value that the operation right for the manufacturing apparatus has not been acquired, the control means is configured to transmit a value for identifying the operation terminal apparatus to the manufacturing apparatus.

7. The operation terminal apparatus according to claim 6, wherein the control means is configured to verify the ID information against an ID information list that stores ID information on an operable manufacturing apparatus, and acquire an operation right for the manufacturing apparatus if the information matches.

8. The operation terminal apparatus according to claim 6 or 7, wherein the operation terminal apparatus is configured to communicate with the manufacturing apparatus through a wireless machine (701) to operate the manufacturing apparatus.

9. The operation terminal apparatus according to claim 8, wherein the control means is configured to not transmit an operation instruction if a difference between a first distance and a second distance is longer than a prescribed threshold, the first distance being between the operation terminal apparatus reading the ID information and the wireless machine, and the second distance being between the operation terminal apparatus and the wireless machine at a time of trying to transmit the operation instruction for actuating the manufacturing apparatus.

## Patentansprüche

1. Herstellungssystem (1) mit einer Herstellungsvorrichtung (101-104) und einer Bediengerätvorrichtung (201-203), die mit der Herstellungsvorrichtung kommunizieren kann,
wobei eine ID-Kennzeichnung mit ID-Informationen über die Herstellungsvorrichtung an der Herstellungsvorrichtung angebracht ist, und
die Bediengerätvorrichtung umfasst:
eine ID-Leseeinrichtung (211) zum Lesen der ID-Informationen von der ID-Kennzeichnung und eine Steuereinrichtung (234) zum Ermöglichen, dass die Herstellungsvorrichtung nur nach Lesen der ID-Informationen von der ID-Kennzeichnung durch die ID-Leseeinrichtung zu bedienen ist,
**dadurch gekennzeichnet, dass**,
wenn die ID-Informationen einen vorbestimmten Wert aufweisen, die Bediengerätvorrichtung zum Empfangen einer ID-Adressnummer von der Herstellungsvorrichtung eingerichtet ist, und wenn die empfangene ID-Adressnummer ein Wert ist, der angibt, dass keine Bedienberechtigung für die Herstellungsvorrichtung erhalten wurde, die Bediengerätvorrichtung zum Senden eines Werts zum Identifizieren der Bediengerätvorrichtung zu der Herstellungsvorrichtung eingerichtet ist,
die Herstellungsvorrichtung zum Schreiben des von der Bediengerätvorrichtung empfangenen Werts zum Identifizieren der Bediengerätvorrichtung als ID-Adressnummer anstelle des Werts eingerichtet ist, dass keine Bedienberechtigung für die Herstellungsvorrichtung erhalten wurde, und
die Herstellungsvorrichtung, die den Wert zum Identifizieren der Bediengerätvorrichtung geschrieben hat, durch die Bediengerätvorrichtung betreibbar ist, deren Wert zum Identifizieren der Bediengerätvorrichtung durch die Herstellungsvorrichtung geschrieben wurde.

2. Herstellungssystem nach Anspruch 1, wobei die Bediengerätvorrichtung zum Ermöglichen einer vorab mit den ID-Informationen verknüpften Bedienung eingerichtet ist.

3. Herstellungssystem nach Anspruch 1 oder 2, wobei die Bediengerätvorrichtung zum Bedienen der Herstellungsvorrichtung über eine Drahtloseinrichtung (701) eingerichtet ist.

4. Herstellungssystem nach Anspruch 3, wobei die Steuereinrichtung zum Nichtsenden einer Bedienanweisung eingerichtet ist, wenn ein Unterschied zwischen einer ersten Entfernung und einer zweiten Entfernung größer als ein vorgeschriebener Schwellenwert ist, wobei die erste Entfernung zwischen der die ID-Informationen lesenden Bediengerätvorrichtung und der Drahtloseinrichtung besteht, und die zweite Entfernung zwischen der Bediengerätvorrichtung und der Drahtloseinrichtung zur Zeit des Versuchens besteht, die Bedienanweisung zum Betätigen der Herstellungsvorrichtung zu senden.

5. Herstellungssystem nach Anspruch 1, wobei
die ID-Leseeinrichtung zur Erzeugung von Strom in der ID-Kennzeichnung über ein Magnetfeld eingerichtet ist.

6. Bediengerätvorrichtung (201-203), die mit einer Herstellungsvorrichtung (101-104) kommunizieren kann, mit
einer ID-Leseeinrichtung (211) zur Erzeugung von Strom in einer ID-Kennzeichnung, die an der Herstellungsvorrichtung angebracht ist, über ein Magnetfeld und Lesen von ID-Informationen über die Herstellungsvorrichtung von der ID-Kennzeichnung, und
einer Steuereinrichtung (234) zum Ermöglichen einer Bedienung der Herstellungsvorrichtung nur nach Lesen der ID-Informationen von der ID-Kennzeichnung durch die ID-Leseeinrichtung,
**dadurch gekennzeichnet, dass**
wenn die durch die ID-Leseeinrichtung gelesenen ID-Informationen einen vorbestimmten Wert aufweisen, die Steuereinrichtung zum Empfangen einer ID-Adressnummer von der Herstellungsvorrichtung eingerichtet ist, und wenn die empfangene ID-Adressnummer den Wert hat, dass keine Bedienberechtigung für die Herstellungsvorrichtung erhalten wurde, die Steuereinrichtung zum Senden eines Werts zum Identifizieren der Bediengerätvorrichtung zu der Herstellungsvorrichtung eingerichtet ist.

7. Bediengerätvorrichtung nach Anspruch 6, wobei die Steuereinrichtung zum Verifizieren der ID-Informationen gegenüber einer ID-Informationsliste, die ID-Informationen über eine bedienbare Herstellungsvorrichtung speichert, und Erhalten einer Bedienberechtigung für die Herstellungsvorrichtung eingerichtet ist, wenn die Informationen übereinstimmen.

8. Bediengerätvorrichtung nach Anspruch 6 oder 7, wobei die Bediengerätvorrichtung zum Kommunizieren mit der Herstellungsvorrichtung über eine Drahtloseinrichtung (701) zum Bedienen der Herstellungsvorrichtung eingerichtet ist.

9. Bediengerätvorrichtung nach Anspruch 8, wobei die Steuereinrichtung zum Nichtsenden einer Bedienanweisung eingerichtet ist, wenn eine Differenz zwischen einer ersten Entfernung und einer zweiten Entfernung größer als ein vorgeschriebener Schwellenwert ist, wobei die erste Entfernung zwischen der die ID-Informationen lesenden Bediengerätvorrichtung und der Drahtloseinrichtung besteht, und die zweite Entfernung zwischen der Bediengerätvorrichtung und der Drahtloseinrichtung zur Zeit des Versuchens besteht, die Bedienanweisung zur Betätigung der Herstellungsvorrichtung zu senden.

## Revendications

1. Système de fabrication (1) comprenant un appareil de fabrication (101-104), et un appareil terminal de mise en œuvre (201-203) pouvant communiquer avec l'appareil de fabrication,
dans lequel une étiquette d'ID comprenant des informations d'ID concernant l'appareil de fabrication est attachée à l'appareil de fabrication, et
l'appareil terminal de mise en œuvre comprend : un lecteur d'ID (211) configuré pour lire les informations d'ID à partir de l'étiquette d'ID ; et un moyen de commande (234) configuré pour ne permettre une mise en œuvre de l'appareil de fabrication qu'après une lecture des informations d'ID à partir de l'étiquette d'ID par le lecteur d'ID,
**caractérisé en ce que**,
lorsque les informations d'ID ont une valeur prédéterminée, l'appareil terminal de mise en œuvre est configuré pour recevoir un nombre d'adresse d'ID de l'appareil de fabrication, et lorsque le nombre d'adresse d'ID reçu a une valeur indiquant qu'un droit de mise en œuvre de l'appareil de fabrication n'a pas été acquis, l'appareil terminal de mise en œuvre est configuré pour transmettre une valeur permettant d'identifier l'appareil terminal de mise en œuvre à l'appareil de fabrication,
l'appareil de fabrication est configuré pour écrire, en tant que nombre d'adresse d'ID, à la place de la valeur indiquant que le droit de mise en œuvre de l'appareil de fabrication n'a pas été acquis, la valeur permettant d'identifier l'appareil terminal de mise en œuvre reçue de l'appareil terminal de mise en œuvre, et
l'appareil de fabrication qui a écrit la valeur permettant d'identifier l'appareil terminal de mise en œuvre peut être mis en œuvre par l'appareil terminal de mise en œuvre dont la valeur permettant d'identifier l'appareil terminal de mise en œuvre a été écrite par l'appareil de fabrication.

2. Système de fabrication selon la revendication 1, dans lequel l'appareil terminal de mise en œuvre est configuré pour permettre une mise en œuvre préalablement associée aux informations d'ID.

3. Système de fabrication selon la revendication 1 ou 2, dans lequel l'appareil terminal de mise en œuvre est configuré pour mettre en œuvre l'appareil de fabrication par l'intermédiaire d'une machine sans fil (701).

4. Système de fabrication selon la revendication 3, dans lequel le moyen de commande est configuré pour ne pas transmettre d'instruction de mise en œuvre si une différence entre une première distance et une seconde distance est supérieure à un seuil prescrit, la première distance séparant l'appareil terminal de mise en œuvre lisant les informations d'ID et la machine sans fil, et la seconde distance séparant l'appareil terminal de mise en œuvre et la machine sans fil à un instant d'essai de transmission de l'instruction de mise en œuvre à des fins d'activation de l'appareil de fabrication.

5. Système de fabrication selon la revendication 1, dans lequel
le lecteur d'ID est configuré pour générer un courant dans l'étiquette d'ID par l'intermédiaire d'un champ magnétique.

6. Appareil terminal de mise en œuvre (201-203) pouvant communiquer avec un appareil de fabrication (101-104), comprenant :
un lecteur d'ID (211) configuré pour générer un courant dans une étiquette d'ID attachée à l'appareil de fabrication par l'intermédiaire d'un champ magnétique et pour lire des informations d'ID concernant l'appareil de fabrication à partir de l'étiquette d'ID ; et
un moyen de commande (234) configuré pour n'autoriser la mise en œuvre de l'appareil de fabrication qu'après la lecture des informations d'ID à partir de l'étiquette d'ID par le lecteur d'ID,
**caractérisé en ce que**,
lorsque les informations d'ID lues par le lecteur d'ID ont une valeur prédéterminée, le moyen de commande est configurée pour recevoir un nombre d'adresse d'ID de l'appareil de fabrication et, lorsque le nombre d'adresse d'ID reçu est la valeur indiquant que le droit de mise en œuvre de l'appareil de fabrication n'a pas été acquis, le moyen de commande est configurée pour transmettre une valeur permettant d'identifier l'appareil terminal de mise en œuvre à l'appareil de fabrication.

7. Appareil terminal de mise en œuvre selon la revendication 6, dans lequel le moyen de commande est configuré pour vérifier les informations d'ID par rapport à une liste d'informations d'ID qui contient des informations d'ID concernant un appareil de fabrication pouvant être mis en œuvre, et pour acquérir un droit de mise en œuvre de l'appareil de fabrication si les informations correspondent.

8. Appareil terminal de mise en œuvre selon la revendication 6 ou 7, dans lequel l'appareil terminal de mise en œuvre est configuré pour communiquer avec l'appareil de fabrication par l'intermédiaire d'une machine sans fil (701) pour mettre en œuvre l'appareil de fabrication.

9. Appareil terminal de mise en œuvre selon la revendication 8, dans lequel le moyen de commande est configuré pour ne pas transmettre d'instruction de mise en œuvre si une différence entre une première distance et une seconde distance est supérieure à un seuil prescrit, la première distance séparant l'appareil terminal de mise en œuvre lisant les informations d'ID et la machine sans fil, et la seconde distance séparant l'appareil terminal de mise en œuvre et la machine sans fil à un instant d'essai de transmission de l'instruction de mise en œuvre à des fins d'activation de l'appareil de fabrication.
